# EUROPEAN PATENT APPLICATION

(11) **EP 1 136 218 A2**
(43) Date of publication of application: **26.09.2001**
(21) Application number: 01301761.1
(22) Date of filing: 27.02.2001
(51) Int. Cl.: B29C 44/12, B29C 44/34

(54) **Foam molding die apparatus**

(30) Priority: 13.03.2000 JP 2000068457; 15.05.2000 JP 2000141955; 19.12.2000 JP 2000385264
(71) Applicant: Daisen Industry Co. Ltd., Ageo-city, Saitama (JP)
(72) Inventor: Nohara, Iwao, Nakatsugawa-city, Gifu (JP); Yoshimura, Shigeki, Ena-gun, Gifu (JP); Ida, Kiyotaka, Nakatsugawa-city, Gifu (JP)
(74) Representative: Paget, Hugh Charles Edward

(57) **Abstract**

A foam molding die apparatus integrally molds a top side member (12) and a back side member (13) via a foam member. This apparatus comprises a plurality of work piece nozzles (3). Of these nozzles, the nozzles for supplying heating steam is structured so that a cylindrical body of which a work piece flow passage having a vent hole incapable of passing raw material beads is formed at a tip end portion is mounted to a die via a heat buffering member (45). In addition, the above nozzles may be structured so that means for forming a vent hole incapable of passing raw material beads is disposed in a synthetic resin based pipe forming a work piece flow passage (43). The work piece nozzles are preferably disposed with intervals of at least 100 mm on the outer face of a die at a portion at which the thickness of a foam molder is less than 10 mm. With respect to a portion at which the thickness of the foam molder is 10 mm or more, these nozzles are preferably disposed with intervals of at least 150 mm.

## Description

### BACKGROUND OF THE INVENTION

### FIELD OF THE INVENTION

The present invention relates to a foam molding die apparatus for integrally molding a top side member and a back side member via a foam member such as drain pan member of air conditioner or dashboard for automobile.

### DESCRIPTION OF RELATED ART

Conventionally, a method of integrally molding a top side member and a back side member via a foam member is described in Japanese Patent Application Laid-open Nos. 4-344227 and 6-210753. In these conventional methods, a top side member that is a top skin is adsorbed on a lower face of a top die; a back side member that is a base material is disposed on a top face of a lower die; and the top and lower dies are closed. In a space formed thereby, raw material beads are charged together with charge air through a raw material supply pipe. A plurality of work pieces as well as raw material supply pipe are disposed at the lower die.

These work piece nozzles are connected to a work piece supply device and its control unit so that one or more kinds of work pieces such as exhaust air, heating steam, pressurization air, vacuum, cooling water or drain can be supplied. A typical function of the work piece nozzle is characterized in that an operation for supplying heating steam in order to heat, fuse, and integrate raw material beads charged in a cavity, and exhausting air from another nozzle is reversed and repeated. However, the above described conventional foam molding apparatus has the following problems.
<1> Not only raw material beads are charged in a die cavity, but a top side member and a back side member are present therein. Thus, there is a possibility that the top and back side members are deformed by heating steam.
<2> In the conventional work piece nozzle, heat is directly conducted from a metal connecting bracket configuring a work piece flow passage to a die, a die temperature rises, and the energy loss of heating steam is generated.
<3> An operation timing such as charging, heating, cooling, and removing raw material beads or foam molder is influenced by a rise or fall of the die temperature, thus making it difficult to reduce a cycle time.
<4> The temperature of heating steam changes according to the die temperature. Thus, the heating and deposition of raw material beads becomes non-uniform, and the quality of a foam molder may change.
<5> Conventionally, there is no standard for disposing pitches of work piece nozzles. Although work piece nozzles have been disposed in pitch of 25 mm to 50 mm as in mere vent holes, such work piece nozzles have their complicated structure and complicated mount, thus resulting in higher cost.
<6> The air tightness of a mutual alignment face of dies is hardly ensured depending on the thickness of the top and back side members. Heating steam leaks from the inside of the cavity, and temperature cannot be adjusted precisely, and quality non-uniformity may occur.

Therefore, it is a primary object of the present invention to provide a foam molding die apparatus wherein the heat rate of heating steam is supplied to raw material beads without a loss, the foam molding die apparatus comprising a work piece nozzle capable of decreasing an energy loss, reducing a cycle time, and improving a foam molder quality. It is another object of the present invention to clarify a standard for disposing a work piece nozzle and to provide an economical foam molding die apparatus. It is still another object of the present invention to provide a foam molding die apparatus capable of maintaining air tightness of a cavity irrespective of the thickness of top and back side members.

### SUMMARY OF THE INVENTION

According to the present invention, there is provided a foam molding die apparatus for integrally molding top and back side members via a foam member inside of a die capable of opening and closing and comprising a plurality of work piece nozzles, wherein at least a nozzle for supplying heating steam of the work piece nozzles has a structure in which a cylindrical body of which a work piece flow passage having a vent hole incapable of passing raw material beads is formed at a tip end portion is mounted on a die via a heat buffering member. In addition, this nozzle may have a structure in which a synthetic resin based pipe forming a work piece flow passage is mounted on a die, and vent hole forming means incapable of passing raw material beads is disposed in the synthetic resin pipe. This vent hole forming means is capable of collectively disposing a plurality of small-diameter synthetic resin based pipes in the synthetic resin pipe or laminating and disposing a plurality of synthetic resin based strip pieces whose cross section is arc-shaped.

In addition, work piece nozzles are preferably disposed on a outer face of a die at a portion at which the thickness of a foam molder is less than 10 mm with an interval of at least 100 mm. With respect to a portion at which the thickness of a foam molder is 10 mm or more, these nozzles are preferably disposed with an interval of at least 150 mm.

Further, it is preferable that a die capable of opening and closing is mounted to be surrounded by a fixing frame and a moving frame; sealing means is contiguously provided at either one or both of an alignment between the frames and an alignment between dies; and the cavity inside of the die and the outside can be structurally spaced from each other.

According to the present invention, charge raw material beads can be heated effectively, making it possible to reduce a die temperature change, and non-uniform quality such as non-uniformity of deposition can be substantially reduced. In addition, there is an advantageous effect that a decreased energy loss and a reduced molding cycle time can be achieved, and moreover, work piece nozzles are properly disposed, thereby suppressing an increased cost. Further, air tightness inside of a cavity can be ensured by employing sealing means.

The invention further consists in the methods of foam molding herein described.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out hereinafter.

### BRIEF DESCRIPTION OF THE SEVERAL VIEWS OF THE DRAWINGS

The accompanying drawings, which are incorporated in and constitute a part of the specification, illustrate presently preferred embodiments of the present invention and, together with the general description given above and the detailed description of the preferred embodiments given below, serve to explain the principle of the present invention.
FIG. 1 is a sectional view showing essential portions of a foam molding apparatus according to the present invention;
FIG. 2 is a sectional view of a work piece nozzle showing an embodiment of the present invention;
FIG. 3 is a sectional view of a work piece nozzle showing another embodiment of the present invention;
FIG. 4 is a sectional view of a work piece nozzle showing still another embodiment of the present invention;
FIG. 5 is a sectional view showing vent hole forming means;
FIG. 6 is a graph depicting a temperature change of each portion when a conventional foam molding apparatus is molded;
FIG. 7 is a graph depicting a temperature change of each portion when a foam molding apparatus according to the present invention is molded;
FIG. 8 is a view showing a work piece piping system of a foam molding die apparatus;
FIG. 9 is a perspective view illustrating a preferable disposition of a work piece nozzle; and
FIG. 10 is a sectional view showing a foam molding die apparatus comprising sealing means.

### DETAILED DESCRIPTION OF THE INVENTION

Reference will now be made in detail to the presently preferred embodiments of the invention as illustrated in the accompanying drawings, in which like reference numerals designate like or corresponding parts.

Now, preferred embodiments of the present invention will be described here.

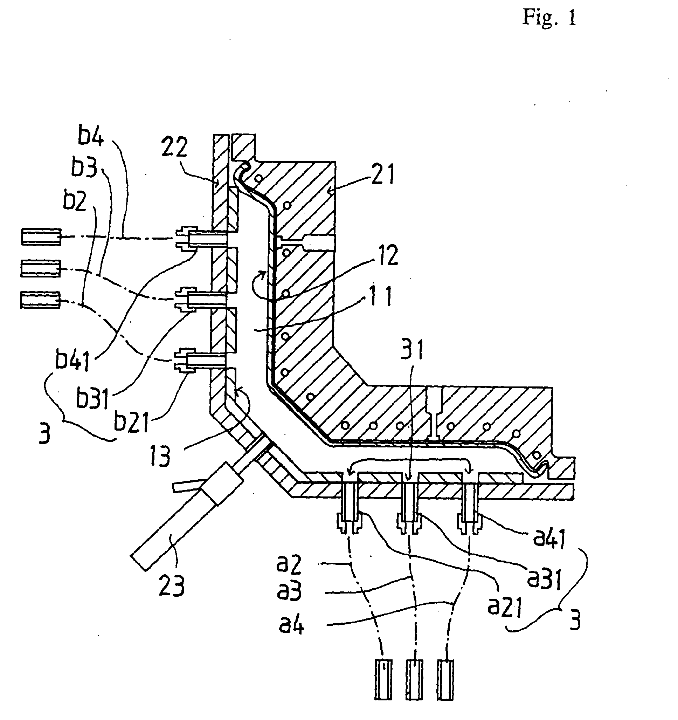

As shown in FIG. 1, a foam molding apparatus according to the present invention is intended for integrally molding a top side member 12 and a back side member 13 via a foam molder, thereby manufacturing a foam composite molder. Of a set of die capable of closing and opening and forming a cavity 11 (a die attaching the top side member 12 thereto is referred to as a die 21, and a die attaching a back side member thereto is referred to as a die 22), a plurality of work piece nozzles 3 are arranged together with a charger 23 for supplying raw material beads made of a foam resin into the die 22 , and then connected to a work piece supply device and its control unit so that one or more kinds of work pieces such as exhaust air, heating steam, pressurization air, vacuum, cooling water or drain can be supplied. When heating steam is supplied, an operation for supplying the steam from a specific work piece nozzle into the cavity 11, and exhausting it from another nozzle is reversed and repeated.

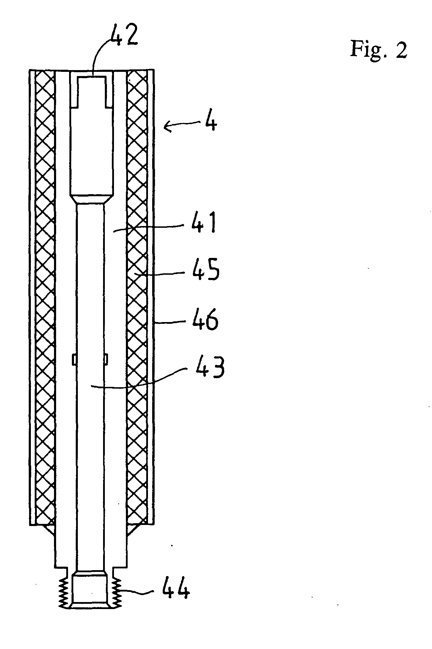

Work piece nozzles are intended for supplying at least heating steam of foam molding work pieces. A work piece nozzle 4 shown in FIG. 2 is provided such that a heat buffering member 45 is arranged at the outer periphery of a cylindrical body 41 made of metallic pipes , for example, to be mountable on the die 22 via these pipes. At the cylindrical body 41, a work piece flow passage 43 having a vent hole incapable of passing raw material beads provided at a tip end portion 42 is formed. A non-metal material with its lower thermal conductivity than a metal is appropriate as a heat buffering material 45. In particular, a synthetic resin or inorganic cement is preferable. A metal protection layer 46 is provided on the outer surface of the heat buffering member 45 for the purpose of reinforce, and a work piece supply pipe is screwed at a rear end portion 44 of the cylindrical body 41.

In this manner, the heat buffering member 45 made of a synthetic resin or inorganic cement or the like is interposed between the cylindrical body 41 made of a metallic pipe for distributing work pieces and the die 22. Thus, the heat rate of heating steam to be supplied is suppressed from flowing on the side of the die 22, and then, causing a loss. As a result, the heat rate of heating steam can be efficiently transmitted to charged raw material beads without unnecessarily heating the die 22. Although the operation or advantageous effect characterized by the present invention lies in remarkable quality improvement of a foam molder obtained, this point will be described later.

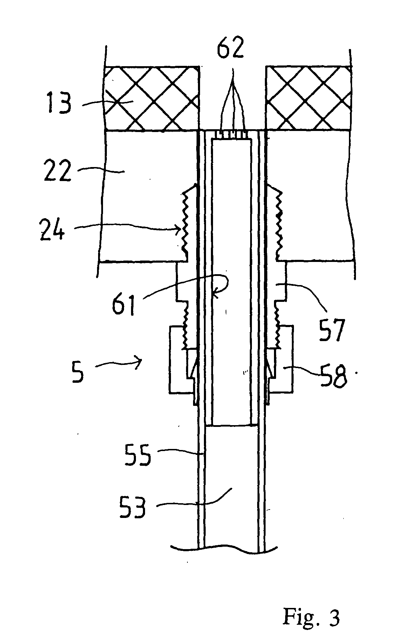

A work piece nozzle 5 shown in FIG. 3 is characterized in that a synthetic resin based pipe 55 forming a work piece flow passage 53 is mountable on a mount hole 24 of the die 22 by means of a fixing bracket 57 and a clamping bracket 58, and vent hole forming means incapable of passing raw material beads is disposed in the synthetic resin based pipe 55. In FIG. 3, a guide pipe 61 having a plurality of vent holes 62 incapable of passing raw material beads at tip ends is disposed as flow passage forming means incapable of passing raw material beads into the synthetic resin based pipe 55. A Teflon based pipe is the most preferable as the synthetic resin based pipe 55 forming the work piece flow passage 53 in view of heat resistance, corrosion resistance, and processing properties. This synthetic resin based pipe 55 can be compatible with a work piece supply pipe. In addition, as the guide pipe 61, either of the metal pipe and synthetic resin pipe can be applied. Further, when the fixing bracket 57 and clamping bracket 58 are mounted on the synthetic resin based pipe 55, and is mounted on and fixed to the mount hole 24 of the die 22 by means of the fixing bracket 57, there is provided an effect of a reinforce material, and there is provided an advantage that the mounting and fixing are rigid.

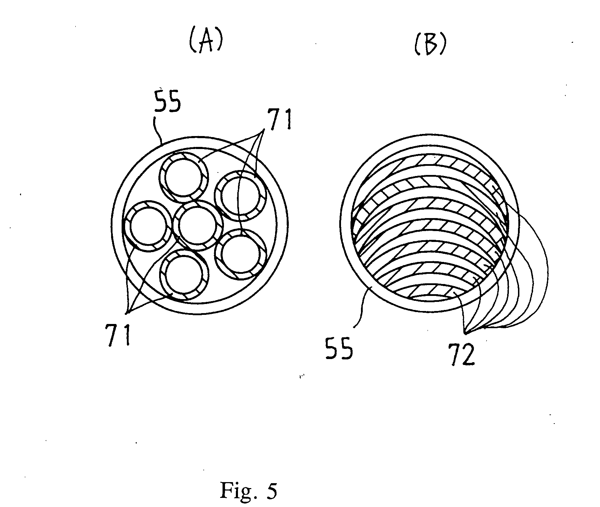

In addition, a work piece nozzle is such that a plurality of small-diameter synthetic resin based pipes 71 having their inner diameter in size incapable of passing raw material beads are disposed collectively as vent hole forming means incapable of passing raw material beads into the synthetic resin based pipe 55. At the tip end cross section of this work piece nozzle, as shown in FIG. 5A, a plurality of small-diameter synthetic resin based pipes 71 (six pipes shown in FIG. 5) are bundled in the synthetic resin based pipe 55, and the spaces inside and outside of the small-diameter synthetic resin based pipe 71 are defined as a vent hole in size incapable of passing raw material beads. With this structure, a vent hole can be precisely held by means of the small-diameter synthetic resin based pipe 71 without using the guide pipe 61.

In addition, as the tip end cross section is shown in FIG. 5B, a plurality of synthetic resin based strip pieces 72 whose cross section is arc-shaped are disposed to be laminated, and a gap between these pieces may be set as a vent hole in size incapable of passing raw material beads. With this structure, although a gap between synthetic resin based strip pieces 72 is inferior in precision when the gap is used as a vent hole, such precision can be achieved by properly laminating synthetic resin based strip pieces 72 fabricated by cutting a Teflon pipe in proper size, the Teflon pipe being homogenous to the synthetic resin based pipe 55 forming a work piece flow passage 53. Thus , there is an advantage that maintenance and management can be carried out very simply.

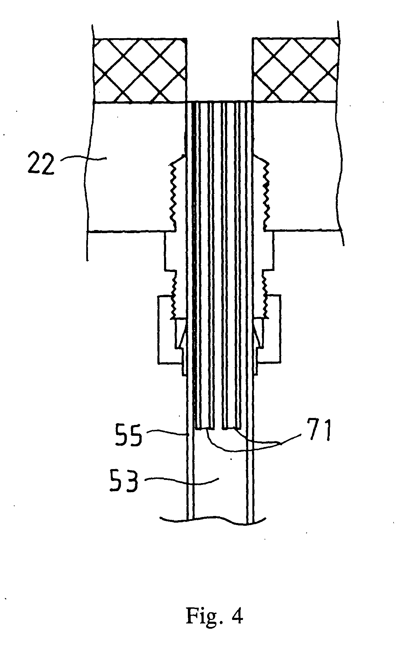

In each of the embodiments shown in FIG. 3 and FIG. 4 described above, the synthetic resin based pipe 55 forming the work piece flow passage 53 is interposed, and work pieces such as heating steam are distributed. Thus, there is provided an advantage in common that the heat rate of heating steam supplied is suppressed from flowing the die side, and then, causing a loss, and charged raw material beads are efficiently transmitted without unnecessarily heating a die.

According to the present invention, the non-uniformity of deposition of a composite foam molder can be significantly eliminated, and the quality is substantially improved. The reason will be described as follows.

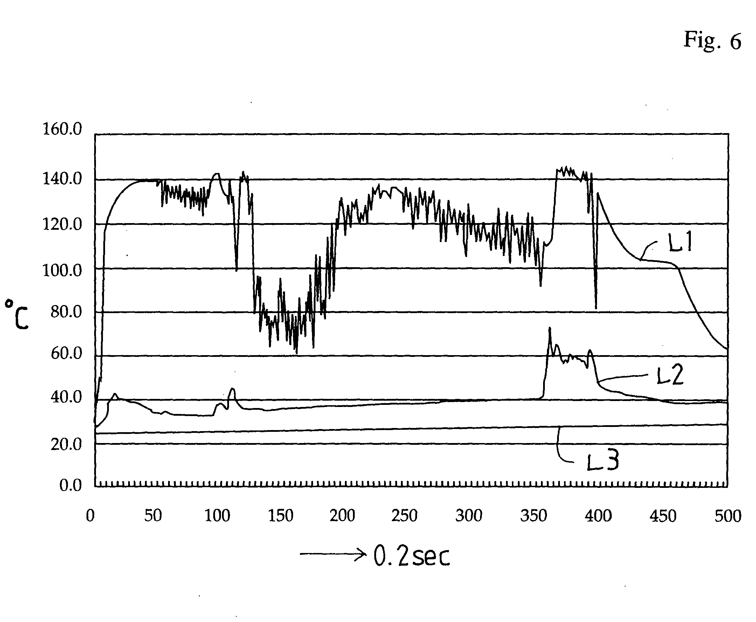

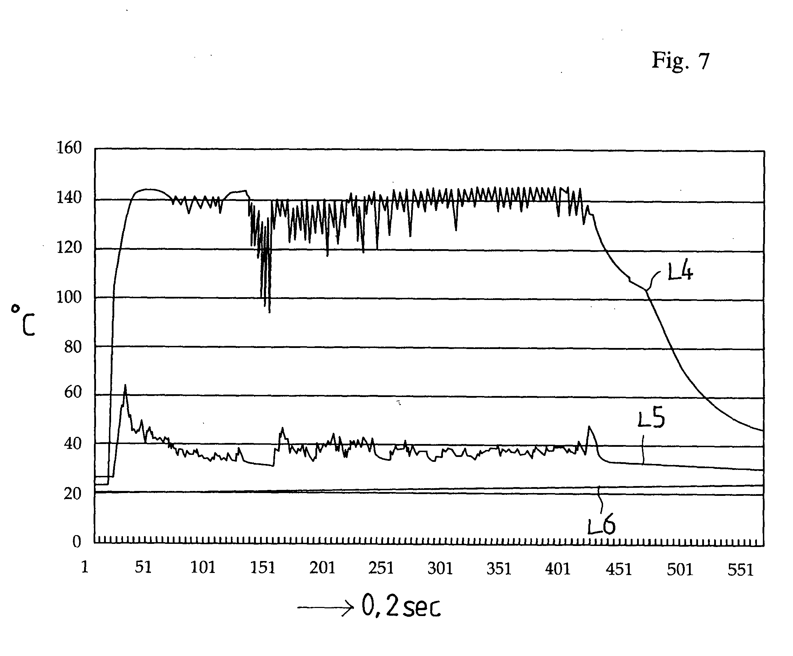

FIG. 6 and FIG. 7 are graphs representing elapses of temperatures (L1, L4) of raw material beads in a cavity, temperatures (L2, L5) of the die 22 at the back side member, and temperatures (L3, L6) of the die 21 at the top side member. FIG. 6 shows a conventionally structured apparatus employing a work piece nozzle. FIG. 7 shows an apparatus employing a work piece being structured according to the present invention. In FIG. 6, a temperature L1 of raw material beads in a cavity significantly changes within the range from a maximum of 140 °C to a minimum of 60 °C , for example. In contrast, in FIG. 7 showing the present invention, although the temperature L4 of the raw material beads in a cavity rises or falls slightly, the temperature is constantly maintained to be 140 °C. The reason why a temperature change is significant in the case of FIG. 6 is that, when the heating steam supply passage is repeatedly reversed, the condensed water with its lowered temperature produced by a thermal loss back-flows. On the other hand, in the work piece nozzle according to the present embodiment, the thermal loss of heating steam is small, and thus, a small amount of such condensed water is produced, and the temperature is less influenced by such condensed water.

As has been described above, it is found that a difference in behavior between temperatures of the raw material beads in a cavity has been an essential factor that greatly influences a finish quality of a composite foam molder. In addition, the heat efficiency relevant to raw material beads is improved by employing the work piece nozzle according to the present invention. Thus, the heating time can be reduced to about 1/2, which greatly contributes to reduction of the molding cycle time.

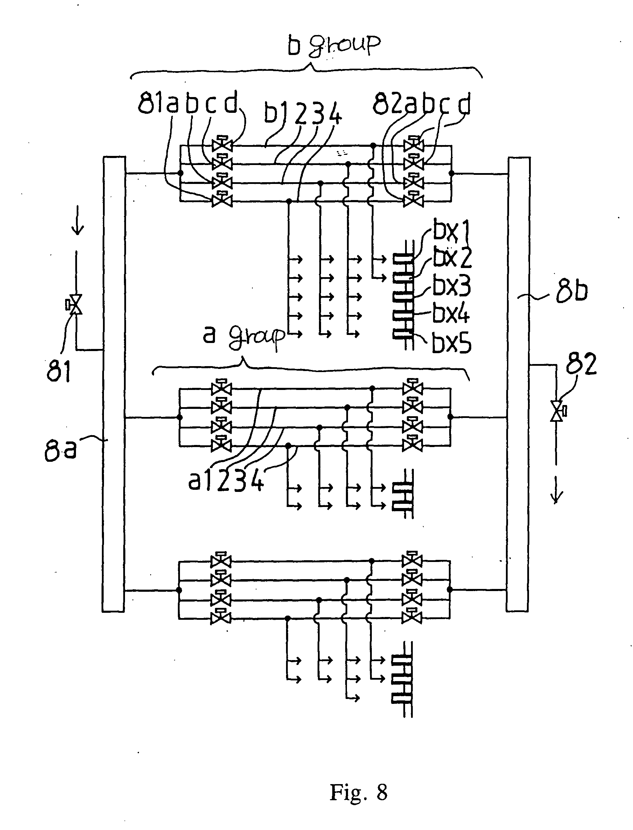

Now, a work piece supply piping system of the foam molding die apparatus according to the present invention will be described here. As shown in FIG. 1 and FIG. 8, a plurality of nozzles a21, a31, a41, b21, b31, b41, ... are disposed at the rear face of a die 22, and these work piece nozzles a21 to b41, ... each are connected to one or more kinds of work piece supply devices (not shown) such as exhaust air, heating steam, pressurization air or drain through piping systems a2, a3, a4, b2, b3, b4, .... A description will be given by exemplifying heating steam. With respect to group "b", the heating steam is supplied from a piping system in the order of main supply valve 81 → server tank 8a → individual supply valves 81a, 81b, 81c and 81d, and is exhausted from a piping system in the order of individual exhaust valves 82a, 82b, 82c and 82d → server tank 8b → main exhaust valve 82. This applies to the other groups.

In this case, exhaust air or drain of the work pieces is exhausted by the exhaust pump, vacuum pump, or drain pump provided at the discharge side. In addition, heating steam, pressurization air or the like is supplied from a steam generator or air compressor such as boiler provided at the supply side. Further, a pressure is controlled as required by means of each of the valves on the supply and discharge sides. In the present invention, it is particularly preferable that drain separators are provided or its function is added relevant to server tanks 8a and 8b. This applies to individual supply valves 81a, 81b, 81c and 81d or individual exhaust valves 82a, 82b, 82c and 82d.

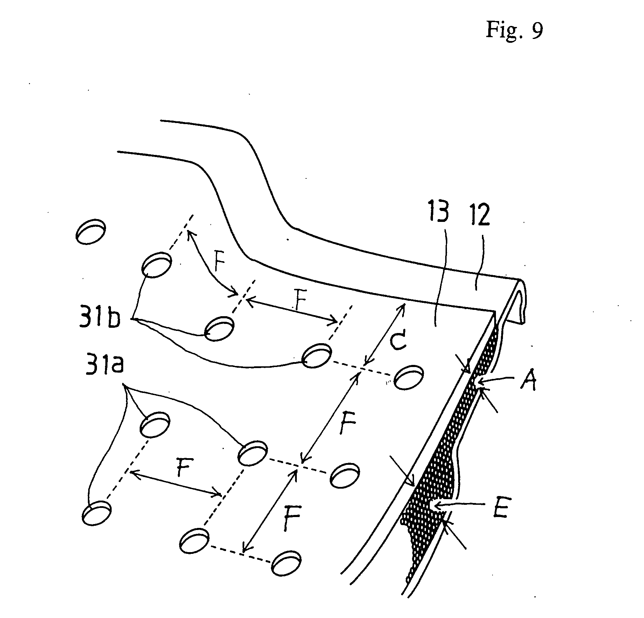

Now, a preferable disposition of a work piece nozzle will be described here. In the preferable embodiment, as shown in FIG. 9, a number of nozzle openings 31a are arranged with an interval F of at least 100 mm at a back side member 13 at a portion at which the thickness E of a foam molder is less than 10 mm. Then, work piece nozzles 3 are mounted with equal intervals on the outer face of the die 22 that corresponds to these nozzle openings 31a. In addition, at a portion at which the thickness E of the foam molder is 10 mm or more, work piece nozzles 3 are preferably arranged with an interval F of at least 150 mm on the outer face of the die at the portion. Further, with respect to work piece nozzles arranged along the shortest distance from an alignment of the dies 21 and 22, that is, work piece nozzles arranged at nozzle openings 31b shown in FIG. 9, these nozzles are preferably arranged at a portion at which the thickness A of a foam molder 4 is 10 mm or less so that a distance C from a tip end 41 of the foam molder 4 is within 30 mm. Alternatively, at a portion at which the thickness is 10 mm or more, these nozzles are preferably arranged at a position at which the distance C from the tip end 41 of the foam molder 4 is within 50 mm. With such disposition, the intervals of work piece nozzles can be 2 to 4 times as compared with a case of a conventional vent hole, and these nozzles are disposed at one side of a die capable of opening and closing. Thus, even if complicated work piece nozzles are employed, a total cost of a die can be sufficiently suppressed. In addition, various work pieces such as exhaust air, heating steam, pressurization air can be supplied constantly and speedily, raw material beads are prevented from being charged non-uniformly, and the non-uniformity of heating during foaming and deposition can be prevented.

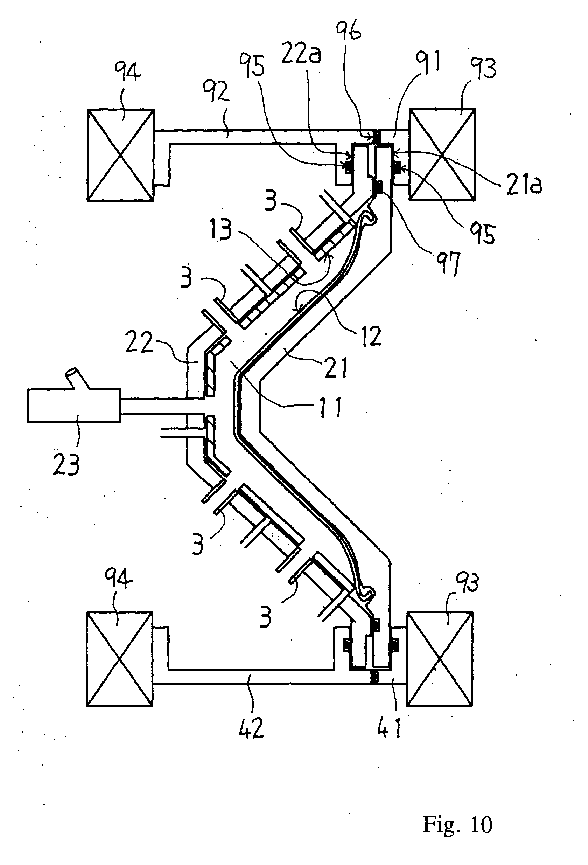

Now, a specific embodiment comprising sealing means will be described with reference to FIG. 10.

In this embodiment, dies 21 and 22 are mounted so that their outer periphery is surrounded by a moving frame 91 and a fixing frame 92. Further, these moving frame 91 and fixing frame 92 are fixed to moving and fixing die plates 93 and 94, respectively. Although this fixing die plate 94 is fixed to a main body (not shown) of the foam molding apparatus, the moving die plate 93 is disposed retractably by means of a hydraulic device. A sealing portion 96 having an elastic sealing body sealed therein is contiguously provided along the whole periphery of the alignment between the moving frame 91 and the fixing frame 92. In addition, a sealing portion 97 having an elastic sealing body sealed therein in the same way is contiguously provided along the whole periphery of the alignment between dies 21 and 22 distant from the top side member 12 and back side member 13. In the case where the dies 21 and 22 are die clamped during molding operation by these sealing means, the cavity 11 can be spaced from the outside with air tightness. Either one of the sealing portions 96 and 97 may be provided, and both of these portions need not to be provided in parallel to each other. In addition, in order to make the above sealing portion 96 efficient, air tightness at the mount portions 21a and 22a of the dies 21 and 22 needs to be maintained. Thus, a similar sealing portion 95 is provided at these mount portions 21a and 22a as well.

With such construction, when the dies 21 and 22 are die closed, even if a change or deviation occurs with the thickness of the top side member 12 or back side member 13, air tightness of a cavity is well ensured. Therefore, a conventional pressure leakage during foam molding or heating steam leakage does not occur.

According to the foam molding die apparatus of the present invention, charge raw material beads can be efficiently heated, a temperature change can be reduced, and the non-uniformity of quality such as non-uniformity of deposition can be significantly reduced. In addition, there is an advantageous effect that a decreased energy loss or reduced molding cycle time can be achieved. In addition, a standard for disposing work piece nozzles is clarified, an economical foam molding die apparatus can be provided, and air tightness of a cavity can be maintained irrespective of the thickness of a top or back side member.

Additional advantages and modifications will readily occur to those skilled in the art. Therefore, the invention in its broader aspect is not limited to the specific details and representative embodiments shown and described herein. Accordingly, various modifications may be made without departing from the spirit or scope of the general inventive concept as defined by the appended claims and their equivalents.

## Claims

1. A foam molding die apparatus for integrally molding a top side member and a back side member via a foam member inside of a die capable of opening and closing and having a plurality of work piece nozzles, said foam molding die apparatus having a construction in which at least a work piece nozzle for supplying heating steam among said workpiece nozzles is provided such that a cylindrical body forming a work piece flow passage having a vent hole incapable of passing raw material beads provided at a tip end portion is mounted on a die via a heat buffering member.

2. A foam molding die apparatus as claimed in claim 1, wherein said cylindrical body is formed of metallic pipes, and the heat buffering member made of a synthetic resin or inorganic cement is provided at the outer periphery of said cylindrical body.

3. A foam molding die apparatus for integrally molding a top side member and a back side member via a foam member inside of a die capable of opening and closing and having a plurality of work piece nozzles, said foam molding die apparatus having a construction in which at least a workpiece nozzle for supplying heating steam among said workpiece nozzle is provided such that a synthetic resin based pipe forming a work piece flow passage is mounted on the die and
means for forming a vent hole incapable of passing raw material beads is disposed in said synthetic resin based pipe.

4. A form molding die apparatus as claimed in claim 3, wherein said means for forming a vent hole is such that a plurality of small-diameter synthetic resin based pipes are disposed collectively in said synthetic resin based pipe.

5. A form molding die apparatus as claimed in claim 3, wherein said means for forming a vent hole is such that a plurality of synthetic resin based stripe pieces whose cross sections are arc-shaped are disposed to be laminated in said synthetic resin based pipe.

6. A form molding die apparatus as claimed in claim 1 or claim 3, wherein work piece nozzles are disposed with intervals of at least 100 mm on the outer face of a die at a portion of which the thickness of a foam molder is less than 10 mm.

7. A form molding die apparatus as claimed in claim 1 or claim 3, wherein work piece nozzles are disposed with intervals of at least 150 mm on the outer face of a die at a portion of which the thickness of a foam molder is more than 10 mm.

8. A form molding die apparatus as claimed in claim 1 or claim 3 , wherein a die capable of opening and closing is mounted to be surrounded by a fixing frame and a moving frame, and sealing means is contiguously provided along either one or both of an alignment between said frames and an alignment of said die, thereby making it possible to separate a cavity inside the die from the outside.
